(19) Europäisches Patentamt
European Patent Office
Office européen des brevets

(11) **EP 1 309 134 B1**

(12) **EUROPEAN PATENT SPECIFICATION**

(45) Date of publication and mention
of the grant of the patent:
**08.10.2008 Bulletin 2008/41**

(51) Int Cl.:
*H04L 12/56* *(2006.01)*

(21) Application number: **01309213.5**

(22) Date of filing: **31.10.2001**

(54) **Master for bluetooth communication and method for establishing beacon channel thereof**

Master zur bluetooth Kommunikation und Verfahren zum Aufbau eines Bakenkanals

Maître pour communication bluetooth et procédé pour établir son canal de balise

(84) Designated Contracting States:
**DE FR GB NL**

(43) Date of publication of application:
**07.05.2003 Bulletin 2003/19**

(73) Proprietor: **SAMSUNG ELECTRONICS CO., LTD.**
**Suwon-City, Kyungki-do (KR)**

(72) Inventors:
• **Lee, Tae-jin**
**Suwon-city,**
**Kyungki-do (KR)**
• **Kang, Woo-Shik,**
**422-1603, Kunyoung 1st Apartment**
**Suwon-City,**
**Kyungki-do (KR)**

(74) Representative: **Robinson, Ian Michael et al**
**Appleyard Lees**
**15 Clare Road**
**Halifax HX1 2HY (GB)**

(56) References cited:
**EP-A- 1 168 158**          **WO-A-00/36757**
**WO-A-01/61936**          **WO-A-99/37106**

• KALIA M ET AL: "EFFICIENT POLICIES FOR INCREASING CAPACITY IN BLUETOOTH: AN INDOOR$PICO-CELLULAR WIRELESS SYSTEM" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, vol. 2 OF 3. CONF. 51, 15 May 2000 (2000-05-15), pages 907-911, XP000968001 ISBN: 0-7803-5719-1
• "BLUETOOTH SPECIFICATION VERSION 1.0 B, CORE" BLUETOOTH SPECIFICATION VERSION, XX, XX, vol. 1, 1 December 1999 (1999-12-01), pages 95-126, XP002174708
• "BLUETOOTH SPECIFICATION VERSION 1.0 B, CORE, LINK MANAGER PROTOCOL" BLUETOOTH SPECIFICATION VERSION, XX, XX, vol. 1, 1 December 1999 (1999-12-01), pages 185-244, XP002174828

**Description**

The present invention relates to a master for bluetooth communication and method for establishing a beacon channel thereof, and more particularly, to a master for bluetooth communication and a variable duration beacon channel for controlling parked slaves.

Generally, Bluetooth is a wireless communication protocol for transmitting data such as video data within a distance from 10m to 100m at a maximum speed of 1Mbps.

Bluetooth units intercommunicating according to a bluetooth communication method are communicably connected through processes such as Inquiry, Inquiry Scan, Page, and Page Scan. Through these processes, a master and a slave are determined according to a role thereof performed in a network.

When rearranging a connection state of the bluetooth units, the time clock and frequency pattern of the bluetooth units need to be matched to one another.

Among the processes of connecting the bluetooth units, Inquiry is a repetitive frequency transmission of a master to a slave for matching the frequency pattern between the master and slave.

Inquiry Scan is the process of frequency detection and synchronization of the slave.

Page is a clock signal transmission from the master to the slave for matching the time clock between the master and slave. Page Scan is the process of clock signal detection and synchronization of the slave.

A piconet is constructed by the above processes in such a manner that at least one slave is connected to a master.

Conventional bluetooth communication enables intercommunication in a piconet by connecting up to seven slaves to a master in active mode. In order to connect a new slave to the piconet in which seven slaves are actively connected to a master, intermittent connection between the new slave and the master should be guaranteed.

The intermittent connection of the master and slave is called a park mode. By controlling the number of slaves in the park mode (hereinafter, referred to as parked slaves), the number of slaves to be connected to the piconet can be variably controlled.

For example, when a new slave is connected to a piconet in which seven slaves are actively connected to a master, an existing slave in the active mode needs to be parked.

The master establishes a beacon channel between transmission channels at regular intervals, allowing parked slaves to synchronize to the master or request switching to the active mode for their desired communication.

If the beacon channel duration is fixed by a master for maintaining connection with parked slaves, the network is inefficiently used, especially in the piconet environments where the number of parked slaves and the type of Synchronous Connection Oriented (SCO) slaves are varied. That is, when the duration of the beacon channel is fixed at a value longer than the minimum duration necessary for maintaining connection with the then parked slaves, the extra time can not be used for data transmission, resulting in inefficient use of the network.

M. Kalia, "Efficient Policies for Increasing Capacity in Bluetooth: An Indoor Pico-Cellular Wireless System", in IEEE 51st Vehicular Technology Conference Proceedings, Tokyo, Japan, 2000, pp.907-911, XP-000968001. This document suggests a method for swapping active and parked slaves in and out of a piconet. The pre-characterising portions of the appended claims are based on this document.

The Bluetooth Specification Version 1.08 (1999-12-01) at pages 95-126 and 185-244 discusses, *inter alia,* the park mode within a Bluetooth system. In particular, a beacon channel used to synchronize the parked slaves is discussed.

Accordingly, the present invention has been made to address the above-mentioned problem, and an aim of the present invention is to provide a master for Bluetooth communications and a method for establishing a beacon channel thereof, for efficiently transmitting data to state the slaves.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:

Figure 1 is a block diagram showing a master according to the present invention;

Figure 2 is a Look Up Table (LUT) of Figure 1;

Figure 3 is a flow chart showing the steps of establishing beacon channel according to the present invention;

Figure 4 is a flow chart showing the steps of obtaining park parameters according to the preferred embodiment of the present invention;

Figure 5 is a timing diagram explaining a method for establishing channels between a master and parked slaves according to the present invention;

Figure 6 is a timing diagram showing park parameters applied to a beacon channel of Figure 5;

Figure 7 is a timing diagram showing an example of communication between a master and a slave in a synchronous section (Dacc) of Figure 6;

Figure 8 is a timing diagram showing an example of communication between a master and a slave in an access window (Aw) section of Figure 6; and

Figure 9 is a detailed timing diagram showing an example of operation between a master and slaves of Figure 8.

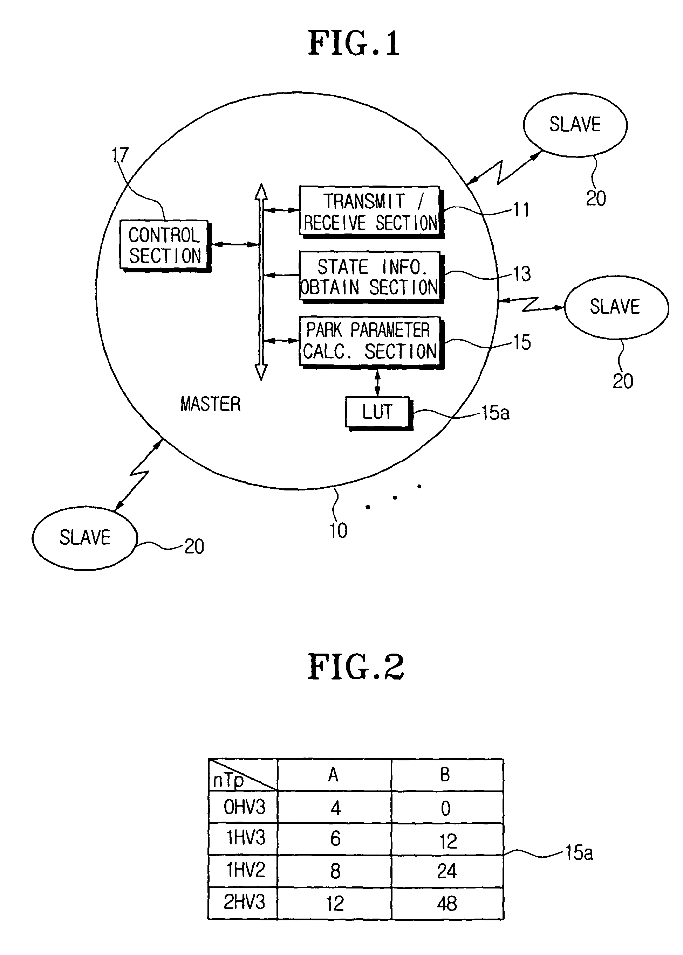

Figure 1 is a block diagram showing a master according to the present invention.

Referring to Figure 1, the master 10 includes a transmitting/receiving section 11, a state information obtaining section 13, a park parameter calculating section 15, and a controlling section 17.

The transmitting/receiving section 11 transmits and receives signals to and from slaves 20.

The state information obtaining section 13 obtains state information from the received signals, including the number of parked slaves 20, and types of Synchronous Connection Oriented (SCO) slaves 20. Here, examples of the types of SCO slaves 20 are HV1, HV2, and HV3. SCO slaves support continuous transmission of data such as voice signals. The numbers 1, 2 and 3 following HV are synchronous connection intervals. For the HV3 type, for example, the master 10 allocates a SCO slot in every third broadcast slot.

The park parameter calculating section 15 calculates park parameters from the state information of the state information obtaining section 13, including the number of beacon slots for synchronization, the number of access windows (Aw), and the number of slots per access window (Aw). The park parameters are applied in establishing a beacon channel suitable for maintaining communications with then-parked slaves 20. Reference numeral 15a is a Look Up Table (LUT) in which reference values for calculating park parameters corresponding to the state information are stored. One example of the LUT is shown in Figure 2.

The controlling section 17 controls each section of the master 10, establishes a beacon channel according to the park parameters from the park parameter calculating section 15, and communicates with the slaves 20 through the transmitting/receiving section 11.

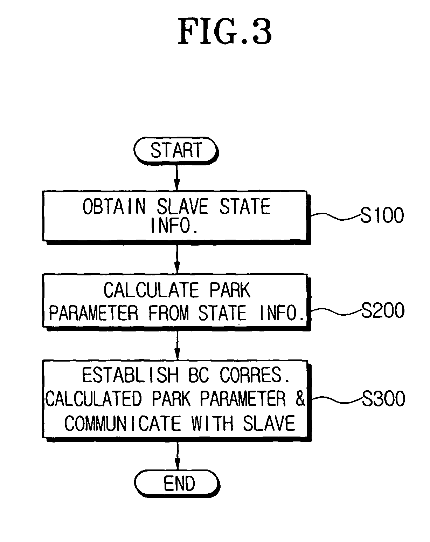

The method for establishing the beacon channel as constructed above will be described referring to Figure 3.

First, the master 10 obtains state information of the slaves 20 (Step S100). Here, the state information includes the number of parked slaves, and the number and types of SCO slaves.

Next, the master 10 calculates park parameters from the state information, for establishing sufficient communications channels with the parked slaves and the SCO slaves (Step S200).

Then, the master 10 establishes a beacon channel corresponding to the calculated park parameters, and communicates with the slaves (Step S300).

The master 10 repetitiously establishes communication channels within the beacon channel and a data transmission channel, and determines parameters of the next beacon channel to be established, according to the state information obtained via the currently established beacon channel and data transmission channel.

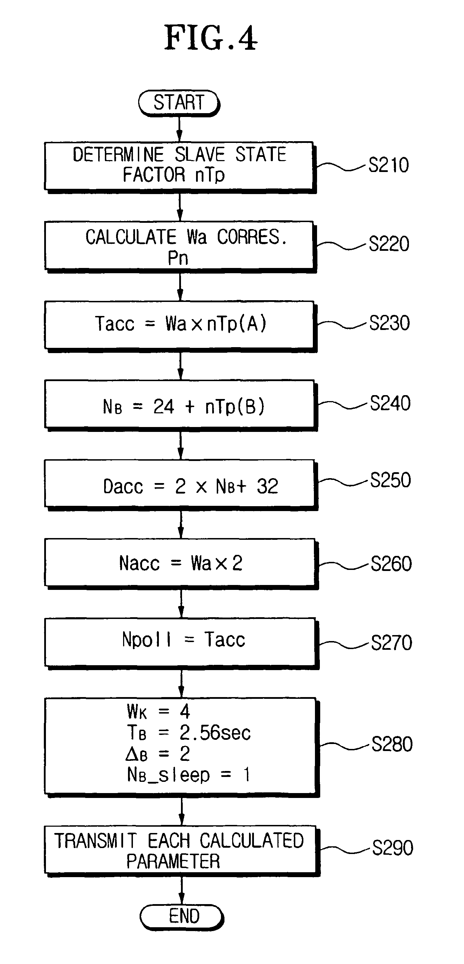

Hereinafter, an example of the calculation of park parameters according to the present invention will be described in detail by referring to Figures 4 through 9.

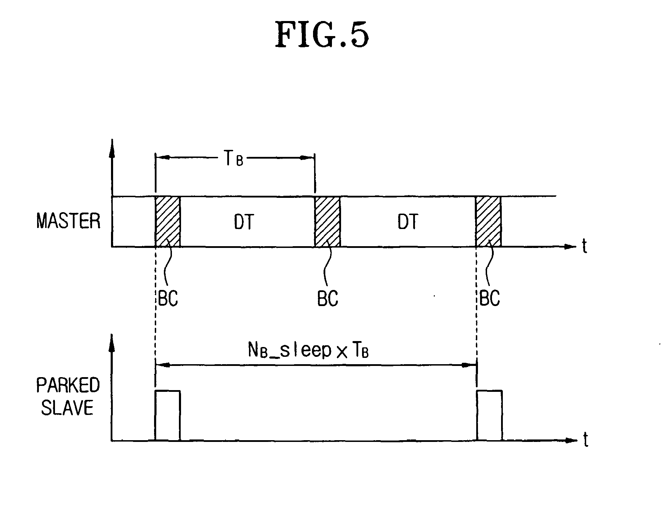

As shown in Figure 5, the master 10 establishes a beacon channel (BC) and a data transmission channel (DT) as a unit cycle (TB), for communicating with the slaves or allowing the slaves to synchronize to the master 10. Here, the duration of the BC is variable, and is based on the park parameters obtained according to the present invention.

The parked slaves synchronize to the master 10 during the BC within a maximum wake-up period of the parked slave (2TB=NB_sleep*TB of Figure 5), and request switching to an unpark, i.e., to an active mode for communicating with the master 10.

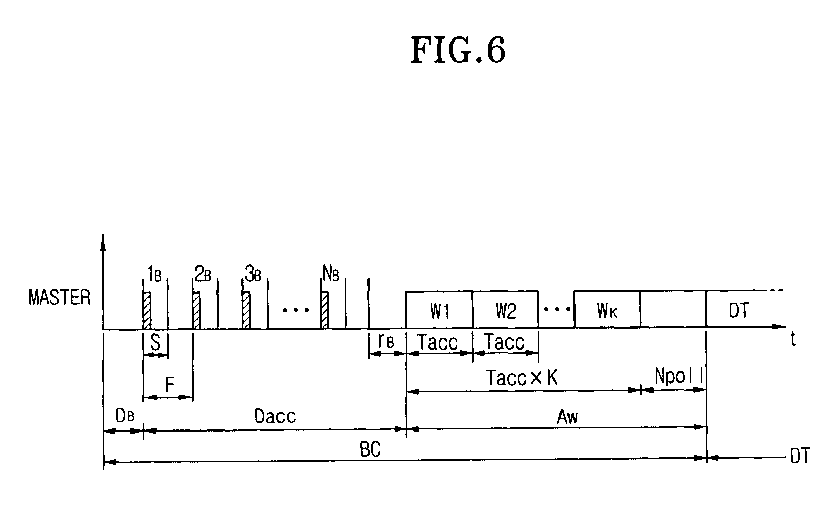

The BC includes a synchronous section (Dacc, Figure 6) for enabling parked slaves to synchronize to the master while being synchronous with the SCO slaves, and an access window (Aw) section for allowing access by slaves. The park parameters include the number of slots to be allocated to the synchronous section (Dacc) and the access window (Aw) section.

An example of the BC as constructed above is shown in Figure 6.

Referring to Figure 6, the BC includes the synchronous section (Dacc) and the access window (Aw) section. Reference characters DB is a delay section representing a delay period before the beginning of the synchronous section (Dacc). The delay section (DB) is a remainder from the division of the master clock into cycles TB.

The synchronous section (Dacc) includes NB beacon slots, each of duration F. Each of these slots is subdivided into two. There is also a spare slot (rB) reserved for switching to the active mode when the slaves 20 receive unpark requests. The first part S of each beacon slot is a broadcast slot. Pause slots between the broadcast slots are reserved for the case of data reception from the slaves 20. A broadcast slot S is thus allocated every second slot. It is preferable that the spare slot rB be subdivided into thirty-two (32) slots. There are uniform intervals between the slots, generally 625 $\mu$sec.

The number of broadcast slots in the synchronous section (Dacc) is determined according to the number of parked slaves and types of SCO slaves.

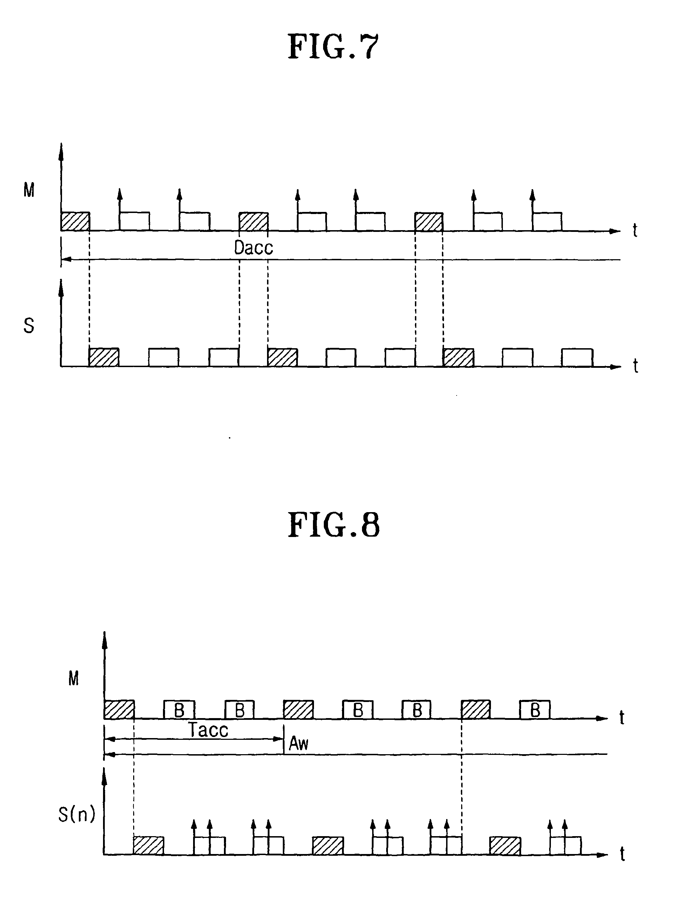

For example, as shown in Figure 7, for a SCO slave of HV3 type, the master 10 allocates a SCO slot (shown hatched) in every third broadcast slot.

Referring to Figure 7, the master 10 allocates one SCO slot (hatched square in Figure 7) in every third broadcast slot of the synchronous section (Dacc), and broadcasts during the rest of broadcast slots (indicated with arrows on the line t) to allow the parked slaves to synchronize to the master. As noted previously, every second slot in the synchronous section (Dacc) is a broadcast slot. The slots following the broadcast slots are for receiving the signals transmitted from the slaves 20. Accordingly, when a slave 20 requests unpark to the master 10 in the access window (Aw), the master 10 sends the unpark command to the slave 20 which requested unpark. The slave 20 which receives the command from the master 10 is switched into the active mode.

The number of slots in the access window (Aw) is determined such that access by each of the parked slaves within an unit access windows (Tacc) is allowed. It is preferable that there be multiple unit access window (Tacc) (k) is allowing re-access of the slaves 20 in case of transmission errors in wireless communication.

In addition to the multiple number (k) of unit access windows (Tacc) for re-access, it is further preferable that a checking window (Npoll) be added for checking unpark commands received from the master 10. The checking window (Npoll) is reserved for receiving an unpark command from the master 10 when a slave 20 requests unpark in the last unit access window (Tacc) of the access window (Aw).

The access window (Aw) according to the preferred embodiment of the present invention includes a plurality of unit access windows (Wk) of duration Tacc, each having a multiple number of access windows for allowing re-access to the slaves that failed to transmit unpark requests, and the checking window (Npoll) for allowing the slaves to check for an unpark command from the master 10. One window contains a plurality of slots.

For example, for a SCO slave of HV3 type, two (2) slots of the six (6) slots within the unit access window are allocated for SCO, and two (2) slots among the remaining four (4) slots are allocated for broadcasting of the master 10. Then the remaining two (2) slots can be allocated for access by the parked slaves, respectively. The parked slaves can access the master 10 after receiving a broadcast message from the master 10. Half slots (312.5 μsec) are used for this purpose, as indicated in the lower half of Figure 8. When using an SCO slave of the HV3 type, four (4) slots of the six (6) slots can thus be used for communication between the parked slaves and the master 10. Thus, with a SCO slave of HV3 type and four (4) parked slaves, the unit access window (Tacc) is established with six slots. This example is shown in Figure 8.

Referring to Figure 8, among the slots established by the master 10, the hatched slots are allocated for communications with the HV3 type SCO slaves. The slaves 20 can get access between each broadcast slot B of the master 10 in the half slots which are indicated with arrows. Accordingly, four (4) parked slaves can obtain access in a unit access window (Tacc) of six (6) slots.

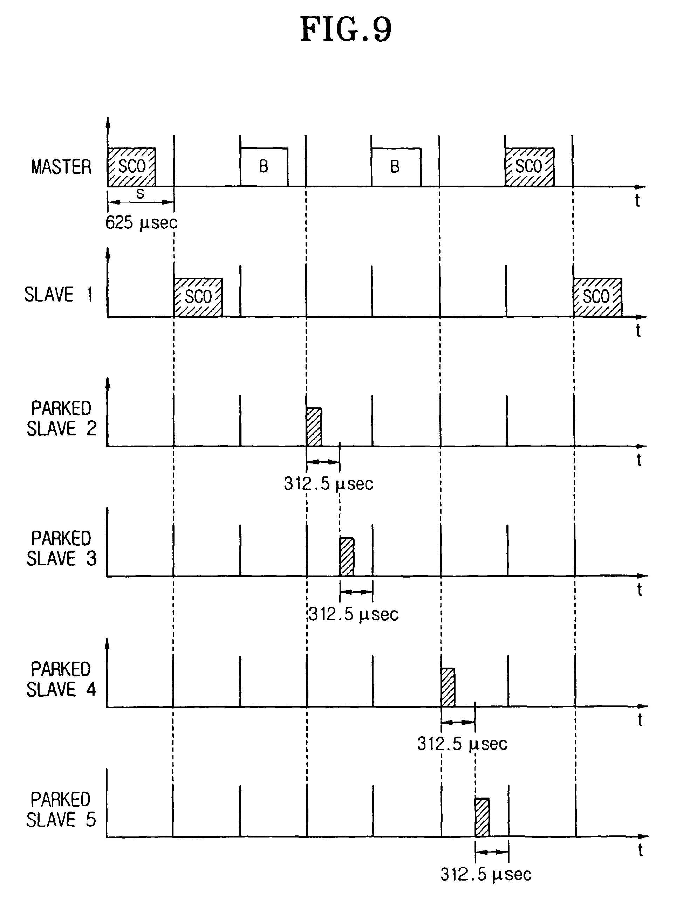

Referring to Figure 9, the master 10 allocates a SCO broadcast slot in every sixth slot for maintaining synchronization with a SCO slave 1 of HV3 type. The SCO slave 1 sends its SCO response to the master 10 in the next slot. Among six (6) slots in the access window (Aw), two (2) slots are thus allocated for SCO, and the master 10 transmits its broadcast message once every second slot for the rest of the four (4) slots. The parked slaves request unpark to the master 10 in a slot between broadcast slots B. Here, four (4) parked slaves are connected to the master 10 in the unit access window (Tacc).

As shown in Figure 9, after the first broadcast slot B, the slot of the parked slaves 2 and 3 is divided into two half slots, and the parked slaves 2 and 3 access the master 10 in the respective half slots. The slot between the second broadcast slot and the following SCO slot is also divided into two half slots, and the parked slaves 4 and 5 access the master 10 in the respective half slots.

Hereinafter, the calculation of park parameters of the number of slots of the BC according to the number of parked slaves and types of SCO slaves, is described in detail with reference to Figure 4.

If the park parameters are applied based on frequently-changing numbers of parked slaves, frequent calculations are required. Thus, an identical weight factor is applied in this preferred embodiment when the park parameters are within a certain range.

First, a connection state factor (nTp) of the slave 20 is determined by the state information (Step S210 in Figure 4). Here, the connection state factor (nTp) is a parameter used in determining the BC and slots per access window (Aw) according to the state information. In this preferred embodiment of the present invention, the LUT 15a indicates reference values used in calculating parameters according to the numbers and types of SCO slaves.

Referring to Figure 2, the factor for the numbers and types of SCO slaves is indicated as nTp. Among the variables, n is the number, and Tp is the type among HV1, HV2 and HV3.

Column A is the number of slots to be applied per access window (Aw) according to the connection state factor. Column B contains reference values in calculating the number of BC in the synchronous section (Dacc).

Next, a weight factor (Wa) corresponding to the number of parked slaves (Pn) is calculated (Step S220).

It is preferable that the weight factor (Wa) is calculated by the following formulas.

First, as shown in Formula 1, a constant 1 is subtracted from Pn which is obtained from the state information.

[Formula 1]

$$temp1 = Pn - 1$$

Next, as shown in Formula 2, temp1, is divided by 4, obtaining the whole-number portion, temp2, and the remainder r.

[Formula 2]

$$temp1 \ / \ 4 \ = \ temp2 \ + \ r$$

Then, in Formula 3, a constant 1 is added to temp2, and the weight factor (Wa) is calculated.

[Formula 3]

$$Wa \ = \ temp2 \ + \ 1$$

According to the Formulas 1, 2 and 3, the weight factor (Wa) is 1 when the numbers of parked slaves are one (1) to four (4), and the weight factor (Wa) is 2 when the numbers of parked slaves are five (5) to eight (8).

The next step is to calculate the number of slots in the unit access window (Tacc) by multiplying the weight factor (Wa) by Column A of LUT 15a corresponding to the connection state factor according to the types and numbers of SCO slaves nTp (Step S230). For example, when the number of parked slaves are four (4) while the SCO slave state is 1HV3, the number of slots of the access window (Aw) is six (6).

Here, a first reference slot number is calculated by adding the four (4) slots which are required for access of four (4) parked slaves, to the number of SCO slots to be additionally allocated corresponding to the number and types of SCO slaves. Column A, the first reference slot number, is determined in such a manner that SCO communication can be maintained, and for the maximum four (4) parked slaves corresponding to weight factor (Wa) 1, at least one access by each parked slave is guaranteed.

Next, the number of broadcast slots of the master (NB) within the BC in the synchronous section (Dacc) is calculated by adding a first constant value to the Column B, (a second reference slot number, corresponding to the SCO slaves nTp (Step S240)).

The first constant value is calculated not by types and numbers of SCO slaves but by multiplying the number of broadcast types by the number of broadcast repetitions.

The first constant value is set so as to allocate three (3) broadcast slots to variable parameter information, a broadcast message to be transmitted to the parked slaves, and a broadcast message of unpark request of the parked slaves, respectively.

Three (3) broadcast types are considered, respectively, when altering parameters of the BC, sending a broadcast message to the parked slaves, and unparking one or more parked slaves. It is preferable that three (3) slots are required for allocating broadcast slots according to the broadcast types. It is also preferable that SCO slots repeatedly broadcast the identical message in case of transmission errors between the master 10 and the slaves 20. In this preferred embodiment, the same message broadcast is repeated eight (8) times for each of the three (3) broadcast types, and twenty-four (24) broadcasting slots are thus required. Twenty-four (24) slots are thus allocated as the first constant value regardless of the SCO state.

Meanwhile, the values in Column B (i.e., the second reference slot number) are set according to the type and number of SCO slaves. Several values are given in Figure 2 for different types and combinations of such slaves.

When the first constant value is determined to be twenty-four (24), additional SCO slots are needed according to the type and numbers of SCO slaves, for generating twenty-four (24) slots of broadcasting message. For example, as shown in Figure 2, for one slave of HV3 type, twelve (12) broadcast slots are allocated among twenty-four (24) slots of broadcasting message for total SCO of twenty-four (24) slots.

Next, the number of beacon slots in the synchronous section (Dacc) is calculated (Step S250). The number of beacon slots in the synchronous section (Dacc) is twice the number of broadcast slots (NB), plus the spare slot (rB). Here, the number of broadcast slots (NB) is doubled to account for the pause slots. The spare slot (rB) value is thirty-two (32).

Then, other parameters are calculated, as shown in Figure 4.

Since half slots are used for accessing parked slaves to the master 10, access to the master 10 by the parked slaves (Nacc) is possible. That is, one parked slave can access during a half slot of the slot allocated by the master 10, while the master 10 can process two (2) parked slaves during one slot. Accordingly, two (2) slots are set for the access of four (4) parked slaves (Step S260).

The number of slots per unit access window (Tacc) is also applied to the check window (Npoll) for checking for unpark request messages (Step S270).

Then, the rest of parameters are set or calculated. The unit access window (Tacc) (Wk) is four (4), allowing additional access for the slaves which failed to access in the first unit Aw. Frequency of the BC and data transmission channel (TB) is set at 2.56 seconds. Intervals ΔB of the broadcast slots are set to two (2), and the maximum wake-up period is 1TB (Step S280).

After the calculation of all parameters for establishing the BC, the calculated parameters are transmitted to the controlling section 17 (Step S290).

The controlling section 17 transmits the received parameter information to the slaves 20, and establishes corresponding BC as shown in Figure 6.

In the master for bluetooth communication and method for establishing the beacon channel thereof according to the present invention, the BC is adjusted without causing overlapping of the BC according to the types of SCO slaves and the numbers of parked slaves, efficiently maintaining communication channels between the master 10 and the slaves 20.

In the drawings and specification, there have been disclosed typical preferred embodiments of the invention and, although specific terms are employed, they are used in a generic and descriptive sense only and not for purposes of limitation, the scope of the invention being set forth in the following claims.

**Claims**

1. A master for Bluetooth-type communication with slaves in a piconet, the master comprising:

   transmitting and receiving means (11) for transmitting and receiving signals to and from the slaves (20);

   **characterised by**:

   state information obtaining means (13) for obtaining state information from the transmitting and receiving means (11) including the number of parked slaves and the number and type of slaves which are Synchronous Connection Oriented within the piconet;
   park parameter calculating means (15) for calculating park parameters from the state information including the number of beacon slots to be generated within a beacon channel (BC) which maintain communication channels with the parked slaves, and the number of slots per access window to be generated within the beacon channel (BC) so that the duration of the beacon channel (BC) is variable; and
   controlling means (17) for establishing the beacon channel (BC) according to the park parameters and for communicating with the slaves through the transmitting and receiving means.

2. The master as claimed in claim 1, wherein the number of slots per access window is determined by multiplying a weight factor which is set according to the number of the parked slaves, by a first reference slot value which is set according to types and numbers of Synchronous Connection Oriented slaves.

3. The master as claimed in claim 2, wherein the weight factor is obtained by subtracting 1 from the number of the parked slaves, dividing the subtracted value by 4, and adding 1 to the whole number portion of the divided value.

4. The master as claimed in claim 3, wherein the first reference slot value is obtained by the addition of a number of slots which are required for access to the parked slaves, to a number of synchronous slots which are additionally allocated corresponding to the types and numbers of Synchronous Connection Oriented slaves.

5. The master as claimed in claim 4, wherein the first reference slot value is recorded in a Look Up Table (15a), which is used in the park parameter calculating means (15).

6. The master as claimed in any preceding claim, wherein the number of beacon slots is obtained by doubling a number of broadcast slots, whose number depends upon at least a first constant value and a second value, which is set according to the types and numbers of Synchronous Connection Oriented slaves, and by adding a spare slot thereto.

7. The master as claimed in claim 6, wherein the first constant value is calculated by multiplying a broadcast repetition value by a broadcast type number, regardless of types and numbers of the Synchronous Connection Oriented slaves.

8. The master as claimed in claim 7, wherein said broadcast repetition number is eight and said broadcast type number is three, corresponding to: (a) parameter altering information for the beacon slot, (b) broadcast messages transmitted to the parked slaves, and (c) unpark messages requested by the parked slaves.

9. The master as claimed in claim 6, 7 or 8, wherein the spare slot includes thirty-two slots, which are used for the unparked slaves to check information on whether there is a new Synchronous Connection from the master.

10. A method for establishing a beacon channel (BC) for maintaining Bluetooth-type communication channels between a master (10) and parked slaves (20) in a piconet, **characterised by** the steps of:

    i) obtaining connection state information including the number of parked slaves obtained from communication with the slaves, and the number and type of slaves which are Synchronous Connection Oriented within the piconet;
    ii) calculating park parameters from the connection state information including the number of beacon slots to be generated within the beacon channel (BC) for maintaining communication with parked slaves and the number of slots per access window to be generated within the beacon channel (BC) so that the duration of the beacon channel (BC) is variable; and
iii) establishing communication channels with the slaves using the beacon channel (BC) established according to the calculated park parameters.

11. The method as claimed in claim 10, wherein calculating the park parameters includes calculating the number of slots per access window, which is determined by multiplying a weight factor according to the number of the parked slaves by a first reference slot value set according to the types and numbers of SCO slaves.

12. The method as claimed in claim 11, wherein the weight factor is calculated by subtracting 1 from the number of the parked slaves, dividing the subtracted value by 4, and adding 1 to the whole number portion of the quotient portion.

13. The method as claimed in claim 12, wherein the first reference slot value is obtained by the addition of a number of slots which are required for access to the parked slaves, to a number of synchronous slots which are additionally allocated corresponding to the types and numbers of Synchronous Connection Oriented slaves.

14. The method as claimed in any of claims 10 to 13, wherein the number of beacon slots is obtained by doubling a number of broadcast slots, whose number depends upon at least a first constant value and a second value, which is set according to the types and numbers of Synchronous Connection Oriented slaves, and by adding a spare slot thereto.

15. The method as claimed in claim 14, wherein the first constant value is calculated by multiplying a broadcast repetition value by a broadcast type number, regardless of types and numbers of the Synchronous Connection Oriented slaves.

16. The method as claimed in claim 15, wherein said broadcast repetition number is eight and said broadcast type number is three, corresponding to: (a) parameter altering information for the beacon slot, (b) broadcast messages transmitted to the parked slaves, and (c) unpark messages requested by the parked slaves.

17. The method as claimed in claim 14, wherein the number of slots in said spare slot is thirty-two.

**Patentansprüche**

1. Master zur Bluetooth-Kommunikation mit Slaves in einem Piconet, aufweisend:

   Sende- und Empfangsmittel (11) zum Senden und Empfangen von Signalen zu und von den Slaves (20);

   **gekennzeichnet durch:**

   Zustandinformationsbeschaffungsmittel (13) zum Beschaffen von Zustandsinformationen von dem Sende- und Empfangsmittel (11), einschließlich der Anzahl geparkter Slaves und der Anzahl und Art von Slaves, die innerhalb des Piconets synchronverbindungsorientiert sind; Parkparameterberechnungsmittel (15) zum Berechnen von Parkparametern aus den Zustandsinformationen einschließlich der Anzahl von in einem Bakenkanal (BC) zu erzeugenden Bakenschlitzen, die Kommunikationskanäle mit den geparkten Slaves unterhalten, und der Anzahl von im Bakenkanal (BC) zu erzeugenden Schlitzen pro Zugangsfenster, so daß die Dauer des Bakenkanals (BC) variabel ist; und Steuerungsmittel (17) zum Herstellen des Bakenkanals (BC) gemäß den Parkparametern und zum Kommunizieren mit den Slaves über das Sende- und Empfangsmittel.

2. Master nach Anspruch 1, wobei die Anzahl von Schlitzen pro Zugangsfenster durch Multiplizieren eines Wichtungsfaktors bestimmt wird, der gemäß der Anzahl von geparkten Slaves eingestellt wird, durch einen ersten Bezugsschlitzwert, der gemäß den Arten und Anzahlen von synchronverbindungsorientierten Slaves eingestellt wird.

3. Master nach Anspruch 2, wobei der Wichtungsfaktor durch Abziehen von 1 von der Anzahl geparkter Slaves, Teilen des abgezogenen Wertes durch 4 und Hinzuaddieren von 1 zu dem ganzzahligen Teil des geteilten Wertes erhalten wird.

4. Master nach Anspruch 3, wobei der erste Bezugsschlitzwert durch Hinzuaddieren einer Anzahl von Schlitzen, die für den Zugang zu den geparkten Slaves erforderlich sind, zu einer Anzahl synchroner Schlitze erhalten wird, die zusätzlich entsprechend den Arten und Anzahlen von synchronverbindungsorientierten Slaves zugeteilt werden.

5. Master nach Anspruch 4, wobei der erste Bezugsschlitzwert in einer Nachschlagetabelle (15a) aufgezeichnet wird, die in dem Parkparameterberechnungsmittel (15) benutzt wird.

**6.** Master nach einem beliebigen vorhergehenden Anspruch, wobei die Anzahl von Bakenschlitzen durch Verdoppeln einer Anzahl von Rundsendungsschlitzen erhalten wird, deren Anzahl von mindestens einem ersten konstanten Wert und einem zweiten Wert abhängig ist, der entsprechend den Arten und Anzahlen von synchronverbindungsorientierten Slaves eingestellt wird, und durch Hinzuaddieren eines Reserveschlitzes dazu.

**7.** Master nach Anspruch 6, wobei der erste konstante Wert durch Multiplizieren eines Rundsendungswiederholungswertes mit einer Rundsendungsartnummer berechnet wird, ungeachtet der Arten und Anzahlen der synchronverbindungsorientierten Slaves.

**8.** Master nach Anspruch 7, wobei die Rundsendungswiederholungsnummer 8 ist und die besagte Rundsendungsartnummer 3 ist, entsprechend: (a) Parameteränderungsinformationen für den Bakenschlitz, (b) den geparkten Slaves übertragene Rundsendungsnachrichten und (c) von den geparkten Slaves angeforderten Nachrichten Rückgängigmachen des Parken.

**9.** Master nach Anspruch 6, 7 oder 8, wobei der Reserveschlitz zweiunddreißig Schlitze einschließt, die für die nichtgeparkten Slaves zum Überprüfen von Informationen darüber benutzt werden, ob es eine neue Synchronverbindung vom Master gibt.

**10.** Verfahren zum Herstellen eines Bakenkanals (BC) zum Unterhalten der Bluetooth-Kommunikationskanäle zwischen einem Master (10) und geparkten Slaves (20) in einem Piconet, **gekennzeichnet durch** folgende Schritte:

    i) Beschaffen von Verbindungszustandsinformationen einschließlich der aus Kommunikation mit den Slaves erhaltenen Anzahl von geparkten Slaves und der Anzahl und Art von Slaves, die im Piconet synchronverbindungsorientiert sind;
    ii) Berechnen von Parkparametern aus den Verbindungszustandsinformationen einschließlich der Anzahl von im Bakenkanal (BC) zu erzeugenden Bakenschlitzen zum Unterhalten von Kommunikation mit geparkten Slaves und der im Bakenkanal (BC) zu erzeugenden Anzahl von Schlitzen pro Zugangsfenster, so daß die Dauer des Bakenkanals (BC) variabel ist; und
    iii) Herstellen von Kommunikationskanälen mit den Slaves unter Verwendung des gemäß den berechneten Parkparametern hergestellten Bakenkanals (BC).

**11.** Verfahren nach Anspruch 10, wobei Berechnen der Parkparameter Berechnen der Anzahl von Schlitzen pro Zugangsfenster einschließt, was durch Multiplizieren eines Wichtungsfaktors entsprechend der Anzahl der geparkten Slaves mit einem gemäß den Arten und Anzahlen von synchronverbindungsorientierten Slaves eingestellten ersten Bezugsschlitzwert bestimmt wird.

**12.** Verfahren nach Anspruch 11, wobei der Wichtungsfaktor durch Abziehen von 1 von der Anzahl der geparkten Slaves, Teilen des abgezogenen Wertes durch 4 und Hinzuaddieren von 1 zu dem ganzzahligen Teil des Quotiententeils berechnet wird.

**13.** Verfahren nach Anspruch 12, wobei der erste Bezugsschlitzwert durch die Hinzuaddierung einer Anzahl von Schlitzen, die für den Zugang zu den geparkten Slaves erforderlich sind, zu einer Anzahl von synchronen Schlitzen erhalten wird, die zusätzlich entsprechend den Arten und Anzahlen von synchronverbindungsorientierten Slaves zugeteilt werden.

**14.** Verfahren nach einem der Ansprüche 10 bis 13, wobei die Anzahl von Bakenschlitzen durch Verdoppeln einer Anzahl von Rundsendungsschlitzen erhalten wird, deren Anzahl von mindestens einem ersten konstanten Wert und einem zweiten Wert abhängig ist, der entsprechend den Arten und Anzahlen von synchronverbindungsorientierten Slaves eingestellt wird, und durch Hinzuaddieren eines Reserveschlitzes dazu.

**15.** Verfahren nach Anspruch 14, wobei der erste konstante Wert durch Multiplizieren eines Rundsendungswiederholungswertes mit einer Rundsendungsartnummer berechnet wird, ungeachtet der Arten und Nummern der synchronverbindungsorientierten Slaves.

**16.** Verfahren nach Anspruch 15, wobei die Rundsendungswiederholungsnummer 8 und die Rundsendungsartnummer 3 ist entsprechend: (a) Parameteränderungsinformationen für den Bakenschlitz, (b) zu den geparkten Slaves übertragenen Rundsendungsnachrichten und (c) von den geparkten Slaves angeforderten Nachrichten Rückgängigmachen des Parkens.

**17.** Verfahren nach Anspruch 14, wobei die Anzahl von Schlitzen in dem Reserveschlitz 32 beträgt.

**Revendications**

**1.** Maître pour la communication type Bluetooth avec des esclaves dans un picoréseau, le maître comprenant :

des moyens d'émission et de réception (11) pour émettre et recevoir des signaux en provenance et à destination des esclaves (20) ;

**caractérisé par** :

des moyens d'obtention d'informations d'état (13) pour obtenir des informations d'état en provenance des moyens d'émission et de réception (11) comprenant le nombre d'esclaves en attente et le nombre et le type d'esclaves orientés connexion synchrone (SCO) à l'intérieur du picoréseau ;
des moyens de calcul de paramètre d'attente (15) pour calculer les paramètres d'attente à partir des informations d'état comprenant le nombre d'intervalles de balise à générer à l'intérieur d'un canal de balise (BC) maintenant les canaux de communication avec les esclaves en attente, et le nombre d'intervalles à générer par fenêtre d'accès à l'intérieur du canal de balise (BC) de façon à ce que la durée du canal de balise (BC) soit variable ; et
des moyens de commande (17) pour établir le canal de balise (BC) en fonction des paramètres d'attente et
pour communiquer avec les esclaves via les moyens d'émission et de réception.

2. Maître selon la revendication 1, dans lequel le nombre d'intervalles par fenêtre d'accès est déterminé en multipliant un coefficient de pondération fixé en fonction du nombre d'esclaves en attente, par une première valeur d'intervalle de référence fixé' en fonction des types et des nombres d'esclaves orientés connexion synchrone.

3. Maître selon la revendication 2, dans lequel le coefficient de pondération est obtenu en soustrayant 1 au nombre d'esclaves en attente, en divisant la valeur soustraite par 4 et en ajoutant 1 à l'ensemble de la portion de nombre de la valeur divisée.

4. Maître selon la revendication 3, dans lequel la première valeur d'intervalle de référence est obtenue par l'addition d'un nombre d'intervalles d'accès nécessaires aux esclaves en attente, à un nombre d'intervalles synchrones alloués en plus correspondant aux types et aux nombres d'esclaves orientés connexion synchrone.

5. Maître selon la revendication 4, dans lequel la première valeur d'intervalle de référence est enregistrée dans une table de conversion (15a) utilisée dans les moyens de calcul de paramètre d'attente (15).

6. Maître selon l'une quelconque des revendications précédentes, dans lequel le nombre d'intervalles de balise est obtenu en doublant un nombre d'intervalles de diffusion, dont le nombre dépend au moins d'une première valeur constante et d'une seconde valeur, fixée en fonction des types et des nombres d'esclaves orientés connexion synchrone, et en y ajoutant un intervalle disponible.

7. Maître selon la revendication 6, dans lequel la première valeur constante est calculée en multipliant une valeur de répétition de diffusion par un nombre type de diffusion, indépendamment des types et nombres d'esclaves orientés connexion synchrone.

8. Maître selon la revendication 7, dans lequel ledit nombre de répétitions de diffusion est égal à huit et ledit nombre de types de diffusion est égal à trois, correspondant : (a) aux informations faisant varier les paramètres pour l'intervalle de balise, (b) aux messages de diffusion transmis aux esclaves en attente, et (c) aux messages de fin d'attente demandés par les esclaves en attente.

9. Maître selon la revendication 6, 7 ou 8, dans lequel l'intervalle disponible comprend trente-deux intervalles, utilisés pour les esclaves sortis de l'attente pour vérifier les informations informant sur la présence ou non d'une nouvelle connexion synchrone provenant du maître.

10. Procédé d'établissement d'un canal de balise (BC) pour maintenir les canaux de communication de type Bluetooth entre un maître (10) et des esclaves en attente (20) dans un picoréseau, **caractérisé par** les étapes de :

i) obtention des informations d'état de connexion comprenant le nombre d'esclaves en attente obtenu de la communication avec les esclaves, et le nombre et le type d'esclaves orientés connexion synchrone à l'intérieur du picoréseau ;
ii) calcul des paramètres d'attente à partir des informations d'état de connexion comprenant le nombre d'intervalles de balise à générer à l'intérieur du canal de balise (BC) pour maintenir la communication avec les esclaves en attente et le nombre d'intervalles par fenêtre d'accès à générer à l'intérieur du canal de balise (BC) de façon à ce que la durée du canal de balise (BC) soit variable ; et
iii) établissement de canaux de communication avec les esclaves à l'aide du canal de balise (BC) établi en fonction des paramètres d'attente calculés.

11. Procédé selon la revendication 10, dans lequel le calcul des paramètres d'attente comprend le calcul du nombre d'intervalles par fenêtre d'accès, qui est déterminé en multipliant un coefficient de pondération en fonction du nombre d'esclaves en attente par une première valeur d'intervalle de référence fixée en fonction des types et nombres d'esclaves SCO.

12. Procédé selon la revendication 11, dans lequel le coefficient de pondération est calculé en soustrayant 1 au nombre d'esclaves en attente, en divisant la valeur soustraite par 4 et en ajoutant 1 à l'ensemble de la portion de nombre de la portion de quotient.

13. Procédé selon la revendication 12, dans lequel la première valeur d'intervalle de référence est obtenue par l'addition d'un nombre d'intervalles d'accès nécessaires aux esclaves en attente, à un nombre d'intervalles synchrones alloués en plus correspondant aux types et aux nombres d'esclaves orientés connexion synchrone.

14. Procédé selon l'une quelconque des revendications 10 à 13, dans lequel le nombre d'intervalles de balise est obtenu en doublant un nombre d'intervalles de diffusion, dont le nombre dépend d'au moins une première valeur constante et d'une seconde valeur, qui est fixée en fonction des types et des nombres d'esclaves orientés connexion synchrone, et en y ajoutant un intervalle disponible.

15. Procédé selon la revendication 14, dans lequel la première valeur constante est calculée en multipliant une valeur de répétition de diffusion par un nombre type de diffusion, indépendamment des types et des nombres d'esclaves orientés connexion synchrone.

16. Procédé selon la revendication 15, dans lequel ledit nombre de répétitions de diffusion est égal à huit et ledit nombre de types de diffusion est égal à trois, correspondant : (a) aux informations faisant varier les paramètres pour l'intervalle de balise, (b) aux messages de diffusion transmis aux esclaves en attente et (c) aux messages de fin d'attente demandés par les esclaves en attente.

17. Procédé selon la revendication 14, dans lequel le nombre d'intervalles dans ledit intervalle disponible est au nombre de trente-deux.

# FIG.1

# FIG.2

| nTp | A | B |
|---|---|---|
| 0HV3 | 4 | 0 |
| 1HV3 | 6 | 12 |
| 1HV2 | 8 | 24 |
| 2HV3 | 12 | 48 |

15a

# FIG.3

```
                    ┌─────────┐
                    │  START  │
                    └────┬────┘
                         │
                         ▼
          ┌──────────────────────────┐
          │   OBTAIN SLAVE STATE      │~S100
          │        INFO.              │
          └──────────────┬───────────┘
                         │
                         ▼
          ┌──────────────────────────┐
          │    CALCULATE PARK         │~S200
          │ PARAMETER FROM STATE INFO.│
          └──────────────┬───────────┘
                         │
                         ▼
          ┌──────────────────────────┐
          │  ESTABLISH BC CORRES.     │
          │ CALCULATED PARK PARAMETER &│~S300
          │  COMMUNICATE WITH SLAVE   │
          └──────────────┬───────────┘
                         │
                         ▼
                    ┌─────────┐
                    │   END   │
                    └─────────┘
```

# FIG.4

START

DETERMINE SLAVE STATE
FACTOR nTp — S210

CALCULATE Wa CORRES.
Pn — S220

$Tacc = Wa \times nTp(A)$ — S230

$N_B = 24 + nTp(B)$ — S240

$Dacc = 2 \times N_B + 32$ — S250

$Nacc = Wa \times 2$ — S260

$Npoll = Tacc$ — S270

$W_K = 4$
$T_B = 2.56sec$
$\Delta_B = 2$
$N_{B\_sleep} = 1$
— S280

TRANSMIT EACH CALCULATED
PARAMETER — S290

END

# FIG.5

# FIG.6

EP 1 309 134 B1

# FIG.7

# FIG.8

# FIG.9

## REFERENCES CITED IN THE DESCRIPTION

### Non-patent literature cited in the description

- **M. KALIA.** Efficient Policies for Increasing Capacity in Bluetooth: An Indoor Pico-Cellular Wireless System. *IEEE 51st Vehicular Technology Conference Proceedings,* 2000, 907-911